# EUROPÄISCHE PATENTANMELDUNG

(11) **EP 3 848 574 A1**
(43) Veröffentlichungstag der Anmeldung: **14.07.2021**
(21) Anmeldenummer: 21150395.8
(22) Anmeldetag: 06.01.2021
(51) Int. Cl.: F03D 1/06

(54) **VERFAHREN ZUM HERSTELLEN EINES WINDENERGIEANLAGEN-ROTORBLATTES**

(30) Priorität: 09.01.2020 DE 102020100275
(71) Anmelder: Wobben Properties GmbH, 26607 Aurich (DE)
(72) Erfinder: Bärtl, Christina, 26603 Aurich (DE); Voigt, Karsten, 39291 Lostau (DE)
(74) Vertreter: Eisenführ Speiser

(57) **Zusammenfassung**

Es wird ein Verfahren zum Herstellen eines Windenergieanlagen-Rotorblattes (200) vorgesehen. Eine Form (300) zur Herstellung zumindest eines Teils des Windenergieanlagen-Rotorblattes (200) wird bereitgestellt. Die Form (300) weist eine Ausnehmung (310) auf, welche zur Herstellung zumindest eines Teils des Windenergieanlagen-Rotorblattes (200) verwendet wird. Flüssiges Erosionsschutzmaterial (260) wird in die Ausnehmung (310) eingetragen. Fasergelege werden in die Ausnehmung (310) der Form (300) platziert, nachdem das flüssige Erosionsschutzmaterial (260) zumindest teilweise ausgehärtet ist. Ein Vakuuminfusionsbeutel oder eine Vakuuminfusionsfolie (280) wird platziert und eine Vakuuminfusion wird mit einem Harz (280) durchgeführt, um ein Verbundbauteil zumindest als Teil des Windenergieanlagen-Rotorblattes (200) zu erhalten.

## Beschreibung

Die vorliegende Erfindung betrifft ein Verfahren zum Herstellen eines Windenergieanlagen-Rotorblattes sowie ein Windenergieanlagen-Rotorblatt.

Die Rotorblätter der Windenergieanlage sind ständig wechselnden Witterungsbedingungen ausgesetzt, die zu Beschädigungen an den Rotorblättern der Windenergieanlage führen können. Zur Reduzierung der Beschädigungen an den Rotorblättern der Windenergieanlage ist es bekannt, eine Erosionsschutzfolie auf die Oberfläche des Rotorblattes aufzubringen. Alternativ dazu kann ein Erosionsschutz nachträglich auf das Rotorblatt durch Aufbringen eines Erosionsschutzmaterials mittels Rollen oder Pinsel erfolgen. Die Verwendung einer Erosionsschutzfolie, welche nachträglich auf die Oberfläche des Rotorblattes geklebt werden muss, oder die Verwendung eines flüssigen Erosionsschutzmittels, welches mittels Rollen und Pinsel auf die Oberfläche des Rotorblattes aufgebracht werden muss, ist jedoch nachteilig, weil damit die aerodynamische Oberfläche des Rotorblattes beeinträchtigt werden kann. Ferner ist ein Aufbringen des Erosionsschutzes auf die Oberfläche des Rotorblattes ebenfalls zeitintensiv.

In der prioritätsbegründenden deutschen Patentanmeldung hat das Deutsche Patent- und Markenamt die folgenden Dokumente recherchiert: US 2019/0153995 A1, US 2017/0058865 A1, US 2017/0145988 A1, DE 10 2015 115 190 A1, DE 10 2013 108 358 A1, DE 10 2008 055 479 A1, DE 10 2016 213 206 A1, EP 2 708 740 A1, WO 2012/113 966 A1 und WO 2016/030 170 A1.

Es ist daher eine Aufgabe der vorliegenden Erfindung, ein Verfahren zum Herstellen eines Windenergieanlagen-Rotorblattes vorzusehen, welches eine verbesserte Erosionsbeständigkeit des Rotorblattes ermöglicht.

Diese Aufgabe wird durch ein Verfahren nach Anspruch 1 sowie durch ein Windenergieanlagen-Rotorblatt nach Anspruch 3 gelöst.

Somit wird ein Verfahren zum Herstellen eines Windenergieanlagen-Rotorblattes vorgesehen. Eine Form zur Herstellung zumindest eines Teils des Windenergieanlagen-Rotorblattes wird bereitgestellt. Die Form weist eine Ausnehmung auf, welche zur Herstellung zumindest eines Teils des Windenergieanlagen-Rotorblattes verwendet wird. Flüssiges Erosionsschutzmaterial wird in die Ausnehmung eingetragen. Fasergelege werden in die Ausnehmung der Form platziert, nachdem das flüssige Erosionsschutzmaterial zumindest teilweise ausgehärtet ist. Ein Vakuuminfusionsbeutel oder eine Vakuuminfusionsfolie wird platziert und eine Vakuuminfusion wird mit einem Harz durchgeführt, um ein Verbundbauteil zumindest als Teil des Windenergieanlagen-Rotorblattes zu erhalten.

Durch die Verwendung eines flüssigen Erosionsschutzmaterials kann das Erosionsschutzmaterial besser an die Konturen der Ausnehmung der Form angepasst werden. Das flüssige Material dringt besser auch in komplexe Konturen der Ausnehmung der Form ein und gewährleistet einen besseren Erosionsschutz auch in komplexen Konturen. Ferner können sowohl Lufteinschlüsse als auch Harzeinschlüsse zwischen der Form und dem Erosionsschutzmaterial vermieden werden. Das flüssige Erosionsschutzmaterial ist ebenfalls prozesssicherer, da das flüssige Erosionsschutzmaterial in der Form nicht verrutschen kann. Das flüssige Erosionsschutzmaterial erlaubt ferner eine schnellere und damit kostengünstigere Verarbeitung.

Gemäß einem Aspekt der vorliegenden Erfindung wird ein Erosionsschutzmaterial (beispielsweise in flüssiger Form) in eine Form zur Herstellung eines Windenergieanlagen-Rotorblattes eingebracht. Nachdem das Erosionsschutzmaterial zumindest teilweise getrocknet bzw. gehärtet ist, können wie in üblicher Form Glasfasergelege in die Form eingelegt werden, um das Rotorblatt herzustellen. Anschließend wird ein Vakuuminfusionsverfahren durchgeführt, so dass sich das Erosionsschutzmaterial sowie die Glasfasergelege und das Epoxidharz verbindet und ein Rotorblatt aus Verbundmaterial mit bereits integriertem Erosionsschutz im Bereich der Vorderkante erreicht wird.

Gemäß einem Aspekt der vorliegenden Erfindung befindet sich die Vorderkante im tiefsten Bereich der Form, so dass das Erosionsschutzmaterial im Bereich der Vorderkante vorgesehen ist.

Gemäß einem Aspekt der vorliegenden Erfindung können Vorderkantenkappen mit integriertem Erosionsschutzmaterial vorgesehen werden.

Mit dem erfindungsgemäßen Verfahren kann somit ein Windenergieanlagen-Rotorblatt hergestellt werden, wobei ein optimaler Erosionsschutz insbesondere im Bereich der Rotorblattvorderkante erreicht wird. Ferner kann eine verbesserte Konturtreue des Bauteils auch nach längerem Betrieb erreicht werden.

Die Erfindung betrifft ebenfalls ein Windenergieanlagen-Rotorblatt mit einer Rotorblattvorderkante, einer Rotorblatthinterkante, einem Rotorblattwurzelbereich und einem Rotorblattspitzenbereich. Mittels des Rotorblattwurzelbereichs kann das Rotorblatt an einer Nabe einer Windenergieanlage befestigt werden. Im Bereich der Rotorblattvorderkante ist ein Verbundbauteil vorgesehen, welches mittels Vakuuminfusionsverfahren hergestellt wird und ein ausgehärtetes Erosionsschutzmaterial sowie Fasergelege aufweist. Das Erosionsschutzmaterial stellt zumindest teilweise die äußere Oberfläche des Verbundbauteils und damit der Rotorblattvorderkante dar.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß einem Aspekt der vorliegenden Erfindung,
- Fig. 2: zeigt eine schematische Darstellung eines Windenergieanlagen-Rotorblattes gemäß einem Aspekt der vorliegenden Erfindung,
- Fig. 3: zeigt eine schematische Schnittansicht einer Form bei der Herstellung eines Windenergieanlagen-Rotorblattes gemäß einem Aspekt der vorliegenden Erfindung, und
- Fig. 4: zeigt eine schematische Teilschnittansicht eines WindenergieanlagenRotorblattes gemäß einem Aspekt der vorliegenden Erfindung.

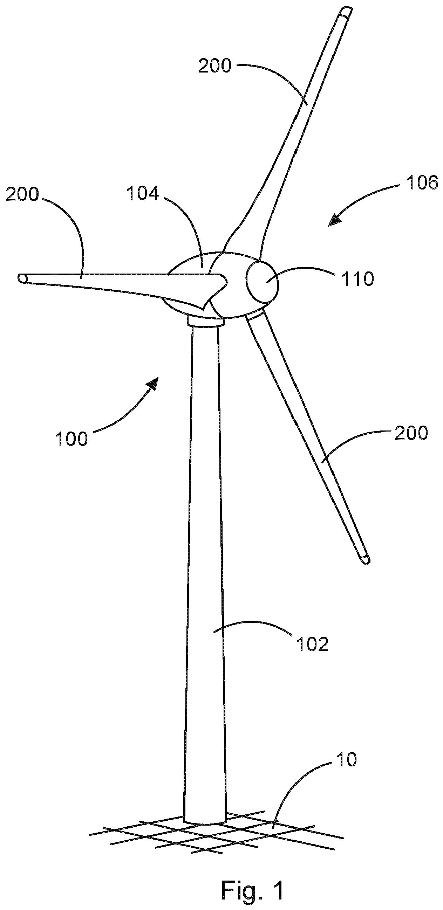

Fig. 1 zeigt eine schematische Darstellung einer Windenergieanlage gemäß einem Aspekt der vorliegenden Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 108b der jeweiligen Rotorblätter 108 verändert werden.

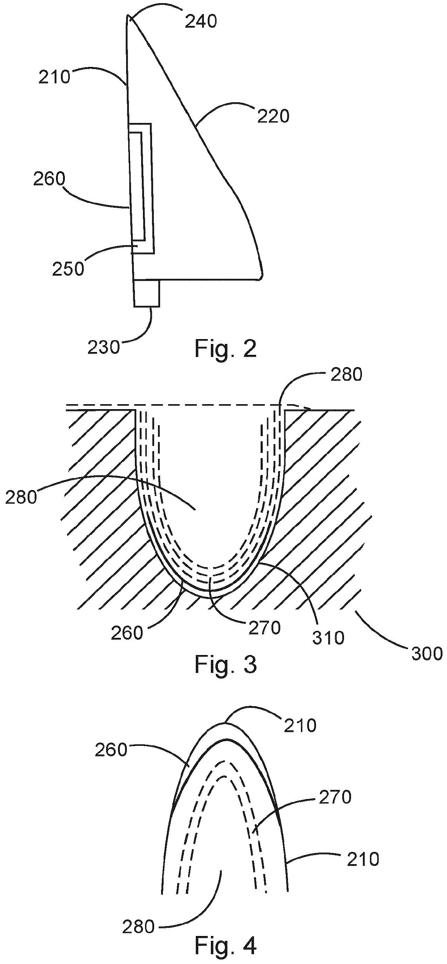

Fig. 2 zeigt eine schematische Darstellung eines Windenergieanlagen-Rotorblattes gemäß einem Aspekt der vorliegenden Erfindung. Das Rotorblatt 200 weist eine Rotorblattvorderkante 210, eine Rotorblatthinterkante 220, einen Rotorblattwurzelbereich 230 und eine Rotorblattspitze 240 auf. Mittels des Rotorblattwurzelbereiches 230 kann das Rotorblatt an einer Nabe der Windenergieanlage befestigt werden. Das Rotorblatt weist ferner eine Rotorblattvorderkappe 250 auf, welche ein Erosionsschutzmaterial 260 aufweisen kann. Das Erosionsschutzmaterial 260 stellt zumindest teilweise die Oberfläche des Rotorblattes insbesondere im Bereich der Rotorblattvorderkante 210 dar. Die Rotorblattvorderkante 210 bzw. die Rotorblattvorderkappe 250 kann zumindest teilweise als ein Faserverbundbauteil ausgestaltet sein, wobei das Erosionsschutzmaterial zumindest teilweise die Oberfläche des Faserverbundbauteils darstellt. Das Faserverbundbauteil kann insbesondere mittels eines Vakuuminfusionsverfahrens hergestellt werden, wobei das Erosionsschutzmaterial Teil des Verbundbauteils ist.

Fig. 3 zeigt eine schematische Schnittansicht einer Form bei der Herstellung eines Windenergieanlagen-Rotorblattes gemäß einem Aspekt der vorliegenden Erfindung. In Fig. 3 ist eine Form 300 gezeigt, welche zur Verwendung einer Herstellung eines Rotorblattes gemäß einem Aspekt der vorliegenden Erfindung verwendet wird. Dazu weist die Form 300 eine Ausnehmung 310 auf, in welche die Fasergelege (Glasfaser oder Kohlestofffaser) zur Herstellung des Rotorblattes der Windenergieanlage eingelegt werden.

Gemäß einem Aspekt der vorliegenden Erfindung wird zunächst (d. h. bevor die (Glas)Fasergelege 270 eingelegt werden) ein flüssiges Erosionsschutzmaterial 260 eingetragen. Dies kann mittels eines Pinsels oder einer Rolle erfolgen (beispielsweise kann dies mittels eines Flachpinsels erfolgen). Nachdem das Erosionsschutzmaterial 260 ausreichend gehärtet ist, können (Glas)Fasergelege 270 in die Form eingelegt werden, um mindestens einen Teil des Rotorblattes ausbilden zu können. Schließlich wird eine Vakuuminfusion durchgeführt, so dass aus dem Erosionsschutzmaterial 260, den eingelegten (Glas)Fasergelegen 270 sowie z. B. Epoxidharz 280 ein Bauteil aus Verbundmaterial hergestellt wird bzw. ein Verbundmaterialbauteil hergestellt wird, welches zur Herstellung des Rotorblattes der Windenergieanlage verwendet werden kann.

Das flüssige Erosionsschutzmaterial kann z. B. 6D1100 vom Hersteller Bergolin oder ALEXIT LE Protect 443-EE vom Hersteller Mankiewicz sein. Die Zeit, die zum Aushärten des Erosionsschutzmaterials benötigt wird, kann z. B. zwischen 10 min. und 60 min. betragen.

Nachdem die Glasfasergelege entsprechend in die Form eingebracht worden sind, kann ein Vakuuminfusionsbeutel oder-folie 280 darüber platziert werden und eine Vakuuminfusion kann durchgeführt werden, bei der insbesondere Epoxidharz mittels Vakuuminfusion eingeführt wird und anschließend ausgehärtet wird, so dass ein Verbundbauteil erhalten wird.

Fig. 4 zeigt eine schematische Teilschnittansicht eines Windenergieanlagen-Rotorblattes. Das Rotorblatt 200 weist eine Rotorblattvorderkante 210 auf. Zumindest teilweise im Bereich der Rotorblattvorderkante 210 ist ausgehärtetes Erosionsschutzmaterial 260 vorgesehen. Ferner weist die Rotorblattvorderkante Fasergelege auf, welche mittels eines Vakuuminfusionsverfahrens und beispielsweise Epoxidharz hergestellt worden sind.

Gemäß einem Aspekt der vorliegenden Erfindung wird ein Verfahren zum Herstellen eines Windenergieanlagen-Rotorblattes vorgesehen. In eine Form zur Herstellung eines Rotorblattes, welche insbesondere zur Herstellung der Rotorblattvorderkante dient, wird ein flüssiges Erosionsschutzmaterial eingetragen, so dass insbesondere die Rotorblattvorderkante damit ausgebildet wird. Nach ausreichendem Aushärten des flüssigen Erosionsschutzmaterials werden Glasfasergelege oder Kohlenstoffgelege in die Form platziert. Anschließend wird ein Vakuuminfusionsbeutel über die Form platziert und eine Vakuuminfusion insbesondere von Epoxidharz wird durchgeführt, um ein Verbundbauteil als Teil des Rotorblattes zu erhalten.

## Patentansprüche

1. Verfahren zum Herstellen eines Windenergieanlagen-Rotorblattes (200), mit den Schritten:
Bereitstellen einer Form (300) zur Herstellung zumindest eines Teils des Windenergieanlagen-Rotorblattes (200), wobei die Form (300) eine Ausnehmung (310) aufweist, welche zur Herstellung zumindest eines Teils des Windenergieanlagen-Rotorblattes (200) verwendet wird,
Eintragen von flüssigem Erosionsschutzmaterial (260) in die Ausnehmung (310),
Platzieren von Fasergelegen in die Ausnehmung (310) der Form (300), nachdem das flüssige Erosionsschutzmaterial (260) zumindest teilweise ausgehärtet ist,
Platzieren eines Vakuuminfusionsbeutels oder einer Vakuuminfusionsfolie (280) und
Durchführen einer Vakuuminfusion mit einem Harz (280), um ein Verbundbauteil zumindest als Teil des Windenergieanlagen-Rotorblattes (200) zu erhalten.

2. Verfahren zum Herstellen eines Windenergieanlagen-Rotorblattes nach Anspruch 1, wobei
das Erosionsschutzmaterial (260) im Bereich einer Rotorblattvorderkante (210) vorgesehen ist.

3. Windenergieanlagen-Rotorblatt, mit
einer Rotorblattvorderkante (210), einer Rotorblatthinterkante (220), einem Rotorblattwurzelbereich (230) und einem Rotorblattspitzenbereich (240),
ausgehärtetem Erosionsschutzmaterial (260), insbesondere im Bereich der Rotorblattvorderkante (210),
Fasergelegen (270),
wobei das ausgehärtete Erosionsschutzmaterial (260) und die Fasergelege (270) ein mittels Vakuuminfusionsverfahren hergestelltes Verbundbauteil darstellen.
